# EUROPEAN PATENT APPLICATION

(11) **EP 2 348 381 A1**
(43) Date of publication of application: **27.07.2011**
(21) Application number: 10195810.6
(22) Date of filing: 17.12.2010
(51) Int. Cl.: G06F 1/20, G06F 1/16

(54) **Laptop cooling platform**

(30) Priority: 17.12.2009 US 287608 P
(71) Applicant: TARGUS GROUP INTERNATIONAL, INC., Anaheim, CA 92806 (US)
(72) Inventor: Vizcarra, Damien, Pasadena, CA 91106 (US); Young, Kevin Robert, Boston, MA 02116 (US); Gallagher, Kevin, Los Angeles, CA 90026 (US)
(74) Representative: Moore, Barry

(57) **Abstract**

Platforms for laptop computers can include one or more cooling features. In some arrangements, a platform includes a support body that has upper and lower panels that at least partially define an interior cavity. A ventilation plate can be disposed in the upper surface of the support body, and can have a plurality of ventilation holes that are in fluid communication with the interior cavity. In some arrangements, the upper panel is angled relative to the lower panel.

## Description

### Technical Field

This disclosure relates generally to laptop support and cooling devices.

### Brief Description of the Drawings

Non-limiting and non-exhaustive embodiments of the disclosure are described, including various embodiments of the disclosure with reference to the following Figures.

FIG. 1 is a perspective view of an embodiment of a laptop cooling platform.

FIG. 2 is a top view of the laptop cooling platform of FIG. 1.

FIG. 3 is a bottom view of the laptop cooling platform of FIG. 1.

FIG. 4 is a side elevation view of the laptop cooling platform of FIG. 1.

FIG. 5 is a perspective view of another embodiment of a laptop cooling platform shown in a closed state.

FIG. 6 is a perspective view of the laptop cooling platform of FIG. 5 shown in an open state.

FIG. 7 is another perspective view of the laptop cooling platform of FIG. 5 shown in a closed state.

FIG. 8 is a perspective view of another embodiment of a laptop cooling platform shown in an open state.

FIG. 9 is a perspective view of another embodiment of a laptop cooling platform showing a mouse pad in a retracted state.

FIG. 10 is another perspective view of the laptop cooling platform of FIG. 9 showing the mouse pad in an extended state.

FIG. 11 is a perspective view of another embodiment of a laptop cooling platform.

FIG. 12 is a top plan view of the laptop cooling platform of FIG. 11.

### Detailed Description

The embodiments of the disclosure will be best understood by reference to the drawings. It will be readily understood that the components of the present disclosure, as generally described and illustrated in the drawings herein, could be arranged and designed in a wide variety of different configurations. Thus, the following more detailed description of the embodiments of the apparatus is not intended to limit the scope of the disclosure, but is merely representative of possible embodiments of the disclosure. In some cases, well-known structures, materials, or operations are not shown or described in detail.

Furthermore, the described features, structures, or characteristics may be combined in any suitable manner in one or more embodiments. It will also be readily understood that the components of the embodiments as generally described and illustrated in the drawings herein could be arranged and designed in a wide variety of different configurations.

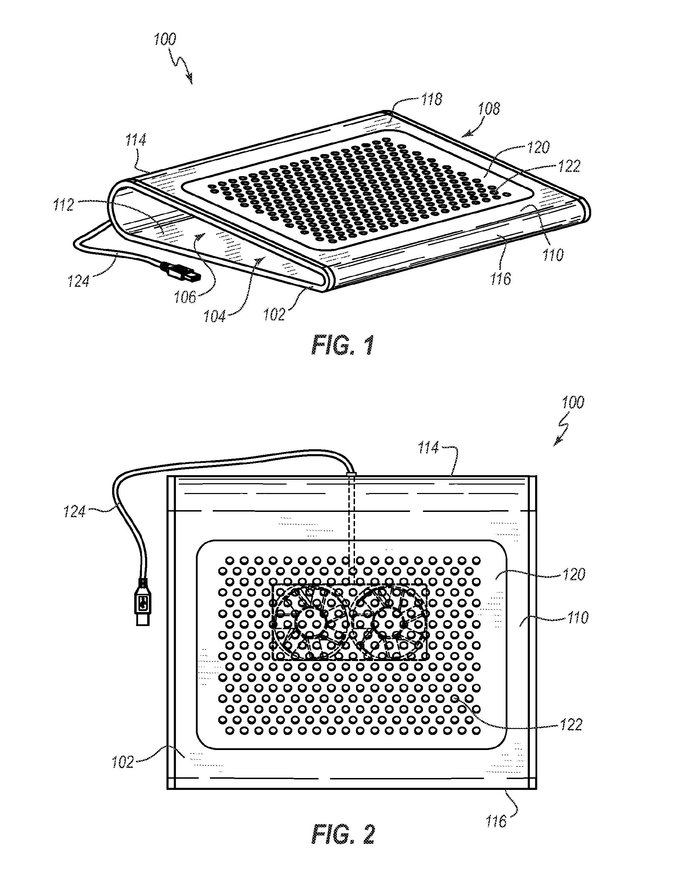

FIGS. 1-4 illustrate an embodiment of a laptop cooling platform 100. With reference to FIG. 1, a perspective view of an upper portion of the laptop cooling platform 100 is shown. The laptop cooling platform 100 comprises a support body 102 that is configured to support a laptop computer (not shown) of any suitable variety. As can be appreciated, the support body 102 may be configured in a variety of sizes depending the size and dimensions of the laptops with which the platform 100 is to be used and/or on user preferences. The support body 102 defines an interior cavity 104 that is configured to provide air insulation and facilitate cooling of a laptop computer. The support body 102 may provide one or more lateral openings 106, 108 that communicate with the interior cavity and that allow air to pass through them, as discussed further below.

An upper panel 110 of the support body 102 may comprise an inclined upper surface that is configured to support a laptop computer thereon at an incline when the support body 102 is at rest on a level surface. As configured, the upper panel 110 couples to a lower panel 112 at opposing rearward and forward ends 114, 116. The ends 114, 116 may be configured in various manners so as to allow the lower panel 112 to support the upper panel 110 in an inclined configuration. In the illustrated embodiment, the ends 114, 116 are curved or rounded. The ends 114, 116 may be designated as greater and lesser curved ends 114, 116, respectively.

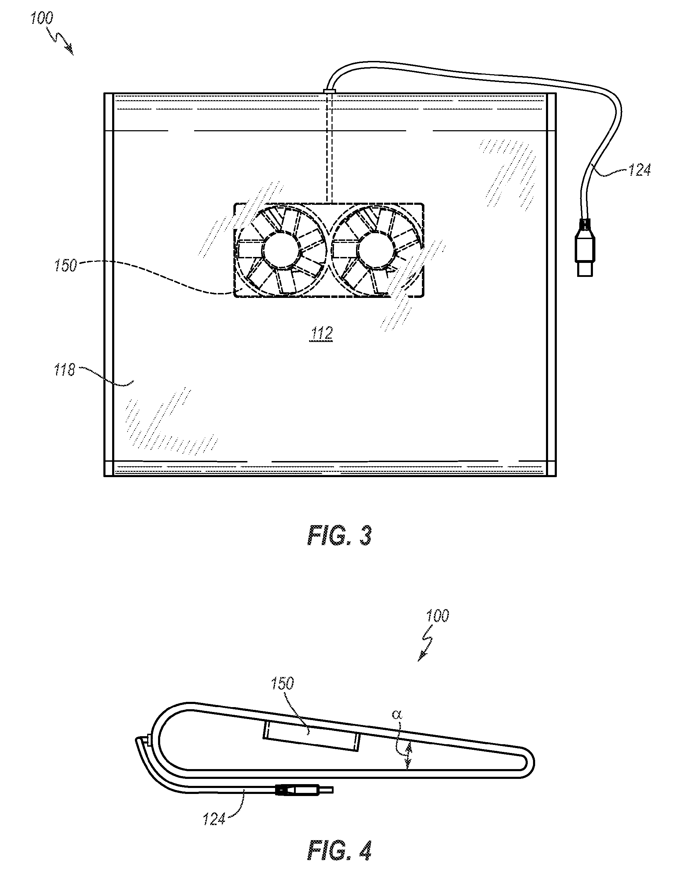

In the illustrated embodiment, each of the upper and lower panels 110, 112 is substantially planar. In particular, an upper surface of the upper panel 110 and a lower surface of the lower panel 112 are each planar, such that when the lower panel 112 is rested on a level, planar surface, the upper panel 112 extends at an angle α (see FIG. 4) relative to the level surface. Stated otherwise, the upper surface of the upper panel 110 and the lower surface of the lower panel 112 can be angled relative to each other by an angle α. The angle α can be selected to provide desirable ergonomics for an end user, such as when the user uses the cooling platform 100 on a planar surface, such as a desk or table, on his or her lap, etc. In various embodiments, the angle α is no less than about 5, 10, 15, 20, 25, or 30 degrees, is no greater than 5, 10, 15, 20, 25, or 30 degrees, or is within a range of from about 5 to about 10, 15, 20, 25, or 30 degrees.

The curved configuration of the rounded ends 114, 116 can provide greater ergonomic utility than other arrangements, in some instances. For example, the rounded forward end 116 can provide a convenient surface against which a user can rest the heels of the palms when using the keyboard of a laptop that is positioned on the platform 100. Similarly, the rounded end 116 may enhance comfort of the platform 100 when the platform 100 is positioned on the legs of a user. A radius of curvature of the rearward end 114 can be greater than a radius of curvature of the forward end 116. For example, in various embodiments, the rearward end 114 can have a radius of curvature that is no less than about 2, 3, 4, or 5 times greater than a radius of curvature of the forward end 116.

At least a portion of the support body 102 can comprise an interfacing material 118, which may be embodied as a cover that encapsulates at least a portion of the support body 102 and/or may be integral with or attached to one or more of the upper and lower panels 110, 112 and the rearward and forward ends 114, 116. The interfacing material 118 can be well-suited for interfacing or interacting with a laptop that is placed thereon and/or may provide comfort for hands that may be rested thereon. For example, in some embodiments, the interfacing material 118 may be thermally insulating, and thus may be configured to reduce heat transfer among various portions of the support body 102. For example, the interfacing material 118 can reduce heat transfer from the upper panel 110 to the forward end 116, and thus may enhance the comfort of a user of the platform 100 whose hands rest on the panel 110 and/or on the forward end 116. Similarly, the interfacing material 118 can generally inhibit heat transfer from the upper panel 110 to the lower panel 112 via either of the ends 114, 116, which may enhance comfort of the cooling platform when it rests on the legs of a user.

In other or further embodiments, the interfacing material 118 can be soft and/or compliant so as to securely receive a suitable support structure of a laptop (e.g., support posts, such as rubber feet of the laptop). The interfacing material 118 may be resilient so as return to an initial orientation after a laptop is removed from the cooling platform 100. In still other or further embodiments, the interfacing material 118 may have relatively high coefficient of friction relative to portions of laptops that may be placed thereon, and can be configured to securely grip the laptop and prevent it from moving after it has been placed on the platform. For example, the interfacing material 118 may comprise a rubberized material that can frictionally engage rubberized feet or other support structures positioned at an underside of a laptop.

The interfacing material 118 may be configured as a flexible and stretchable layer that is wrapped over, expanded over, or otherwise extends about at least a portion of the support body 102. The interfacing material 118 may also be configured as a rigid or semi-rigid material that is secured to the support body 102. The interfacing material 118 may be attached to the support body 102 in any suitable manner, such as by friction fit, adhesives, rivets, staples, and/or other connection devices.

In the illustrated embodiment, the interfacing material 118 comprises a unitary piece of material that extends over both the upper and lower surfaces 110, 112 and the opposing curved ends 114, 116. The interfacing material 118 may comprise a variety of suitable materials. For example, in various embodiments, the interfacing material 118 comprises synthetic rubber (e.g., neoprene) and/or natural rubber. As previously mentioned, the interfacing material may have insulation properties so as to inhibit movement of heat.

The upper panel 110 may further include a ventilation plate 120. The ventilation plate 120 may be configured as a rigid platform upon which a laptop computer can rest. The ventilation plate 120 may be formed of any suitable material, such as a rigid plastic. An upper surface of the ventilation plate 120 can face outwardly and can be configured to receive a laptop computer thereon. In the illustrated embodiment, the upper surface of the ventilation plate 120 is substantially planar. A lower surface of the ventilation plate 120 can face inwardly to define a portion of the interior cavity 104.

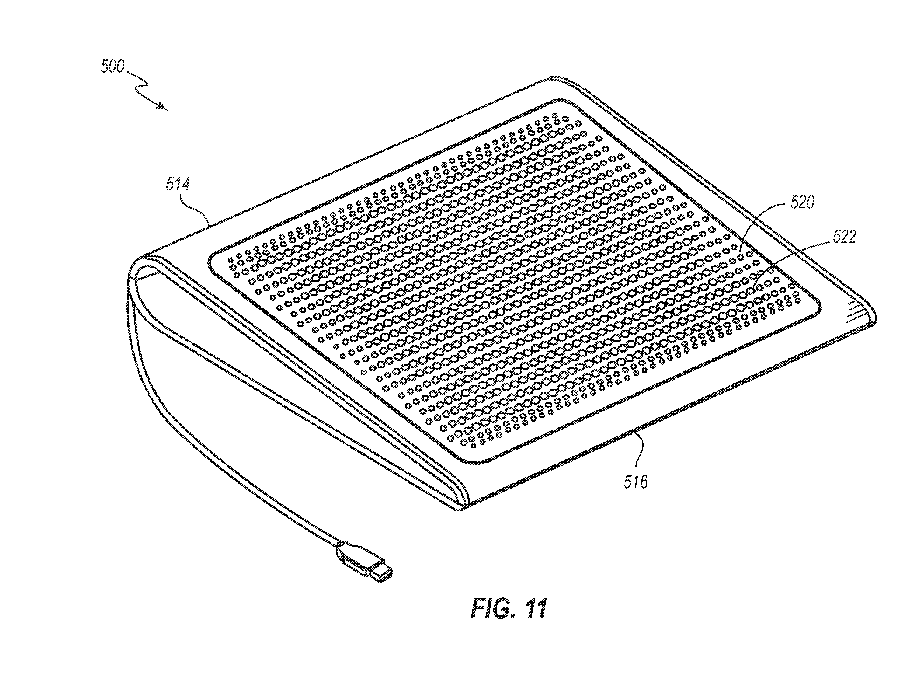

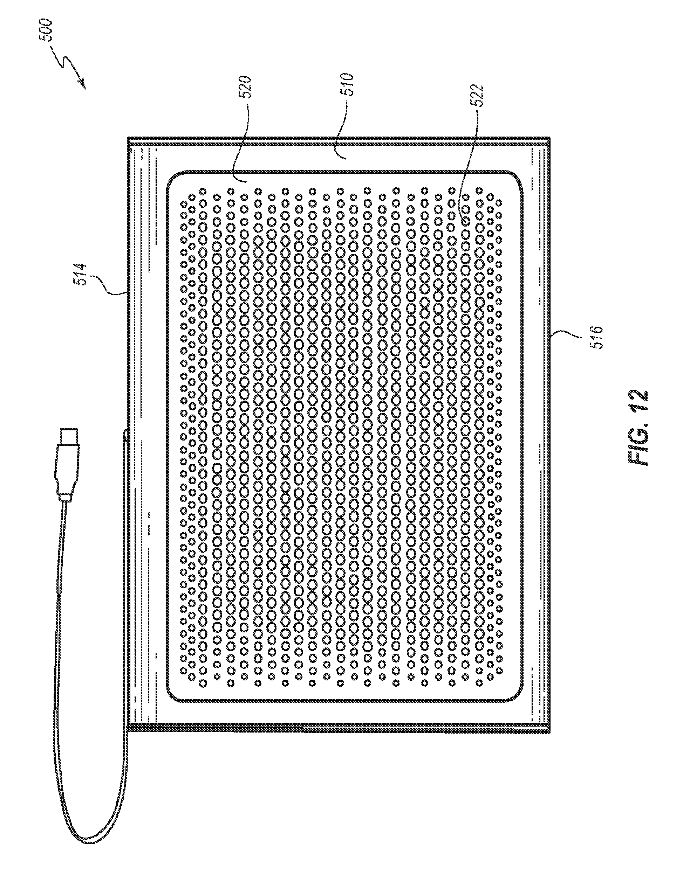

The ventilation plate 120 may include a plurality of ventilation openings 122. The ventilation openings 122 may be configured as slots, apertures, or any other suitable arrangement of openings that extend through the ventilation plate 120. The ventilation openings 122 thus are in fluid communication with the interior cavity 104 and the lateral openings 106, 108, which can facilitate air flow past or from an underside of a laptop computer that rests on the ventilation plate 120 and the dissipation of heat. In some embodiments, the ventilation openings 122 may be larger at a central region of the ventilation plate 120 and smaller about a peripheral portion of ventilation plate 120 (see FIGS. 11 and 12).

In some embodiments, one or both of the lateral openings 106, 108 may extend between the front and back ends 116, 114, and may further extend between the upper and lower panels 110, 112. Each lateral opening 106, 108 can be substantially larger than any of the ventilation openings 122, and thus can permit greater airflow through it than do any of the openings 122 individually. In the illustrated embodiment, the support body 102 can include two lateral openings 106, 108 at opposite sides thereof. Multiple lateral openings 106, 108 can allow for relatively large air flow into and/or out of the interior cavity 104, and may permit cross-flow through the interior cavity 104, in certain arrangements. In other embodiments, additional larger openings may be disposed in the support body 102 (e.g., in one or more of the front and back ends 116, 114). In other embodiments, only one lateral opening 106, 108 may be present at a side of the support body 102.

In the illustrated embodiment, the interfacing material 118 frames the ventilation plate 120 on all sides thereof. Stated otherwise, the interfacing material 118 does not extend over the ventilation plate 120, but rather, borders the ventilation plate 120 on all sides. In the illustrated embodiment, the interfacing material 118 covers a minority of the upper panel 110.

In other embodiments, the interfacing material 118 may partially frame the ventilation plate 120, or stated otherwise, border only a portion of the ventilation plate 120. In still other or further embodiments, the interfacing material 118 may cover at least a majority of the upper panel 110, and may extend over at least a portion of the ventilation plate 120. In certain of such embodiments, the ventilation openings 122 may be disposed through the interfacing material 118 so as to permit fluid communication between an upper side of the ventilation plate 120 and the interior cavity 104. In some embodiments, the ventilation plate 120 may extend across the entire surface of the upper panel 110. In certain of such embodiments, the interfacing material 118 can cover only the curved ends 114, 116 and the lower panel 112 and no portion of the ventilation plate 120. In other of such embodiments, the interfacing material 118 can cover at least a portion of the ventilation plate 120 (e.g., an entirety thereof), and may cover the full upper panel 110.

As shown in FIG. 3, in the illustrated embodiment, the interfacing material 118 covers substantially all of an exterior surface of the lower panel 112. Accordingly, when the laptop cooling platform 100 rests on a surface, the interfacing material 118 can, in some embodiments, provide insulation to the surface. This can reduce heat transfer when the laptop cooling platform 100 is placed on a user's thighs, for example, so as to inhibit discomfort to a user. In various embodiments, interfacing material 118 covers at least a majority of the lower panel 112.

Various features of the support body 102 thus can be configured to reduce heat transfer from a laptop computer that rests on an upper surface of the support body 102 to other portions of the support body 102. For example, certain embodiments of the interfacing material 118 and/or the ventilation openings 122 can prevent heat transfer in manners such as described above. Moreover, air flow is permitted through the lateral openings 106, 108 of the interior cavity 104 to allow dissipation of heat that enters the cavity 104 through the ventilation openings 122.

The foregoing cooling or heat dissipative features may be referred to as passive cooling features. In some embodiments, the cooling platform 100 may include only passive cooling features. However, in other embodiments, such as that depicted in FIGS. 1-4, the cooling platform 100 may include active cooling features.

With reference to FIG. 4, in some embodiments, the laptop cooling platform 100 can comprise an active cooling member 150, which may be disposed within the interior cavity 104. The active cooling member 150 can be coupled to the ventilation plate 120 and may generate or enhance airflow through the interior cavity 104. A control cable or power cable 124 can be electrically coupled to the active cooling member 150, which may thus provide the active cooling member 150 with power. In some embodiments, the power cable 124 comprises a USB cable that is configured to be coupled to a USB port of a laptop computer, although other configurations are also possible. Accordingly, in some embodiments, power delivered to the active cooling members can be generated by the laptop computer itself. In other embodiments, the laptop cooling platform 100 may include its own power supply. For example, the active cooling member 150 may be battery powered.

The active cooling member 150 may comprise any of a variety of suitable devices, such as one or more air flow turbines or fans. In some embodiments, the active cooling member 150 is configured to draw heated air through the ventilation openings 122 into the interior cavity 104 and out of the lateral openings 106, 108 of the cavity. Oppositely directed airflow is also possible.

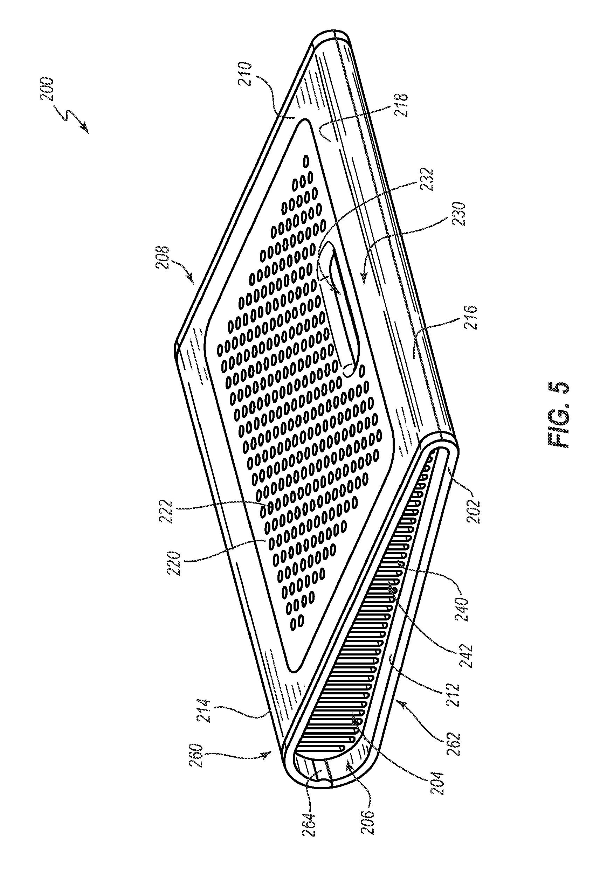

FIGS. 5-7 illustrate another embodiment of a laptop cooling platform 200 that can resemble the laptop cooling platform 100 described above in certain respects. Accordingly, like features are designated with like reference numerals, with the leading digits incremented to "2." Relevant disclosure set forth above regarding similarly identified features thus may not be repeated hereafter. Moreover, specific features of the laptop cooling platform 200 may not be shown or identified by a reference numeral in the drawings or specifically discussed in the written description that follows. However, such features may clearly be the same, or substantially the same, as features depicted in other embodiments and/or described with respect to such embodiments. Accordingly, the relevant descriptions of such features apply equally to the features of the laptop cooling platform 200. Any suitable combination of the features and variations of the same described with respect to the laptop cooling platform 100 can be employed with the laptop cooling platform 200, and vice versa. This pattern of disclosure applies equally to further embodiments depicted in subsequent figures and described hereafter.

With reference to FIG. 5, the laptop cooling platform 200 can include a support body 202 that defines upper and lower panels 210, 212 that are joined to each other at rounded rearward and forward ends 214, 216. The upper panel 210 can include a ventilation plate 220 with ventilation openings 222. The ventilation plate 220 can be bordered by an insulating material 218. The support body 202 defines an interior cavity 204 with lateral openings 206, 208.

The support body 202 can further include a handle 230 by which a user can readily grasp and transport the cooling platform 200. In the illustrated embodiment, the handle 230 is partially defined by the upper and lower panels 210, 212, the forward end 216, and a handle opening 232 that extends through the upper and lower panels 210, 212. Accordingly, the handle 230 is incorporated into the support body 202. Other suitable arrangements for the handle 230 are also possible. For example, the handle 230 could comprise a separate member that projects away from the forward end 216 of the support body 202.

The support body 202 also includes a plurality of fins or ribs 240 that extend in a substantially vertical direction, whether upwardly from the lower panel 212 and/or downwardly from the upper panel 210. In the illustrated embodiment, all of the ribs 240 extend upwardly from the lower panel 212. The ribs 240 are resiliently flexible and may comprise any suitable material, such as an elastomeric material (e.g., natural and/or synthetic rubber). In other embodiments, the ribs 240 may be rigid. Each set of adjacent ribs 240 can define a lateral ventilation opening 242 that provides fluid communication between the interior cavity 204 and an external environment of the laptop cooling platform 200. The lateral ventilation openings 242 can provide for enhanced air circulation into and out of the cavity 204.

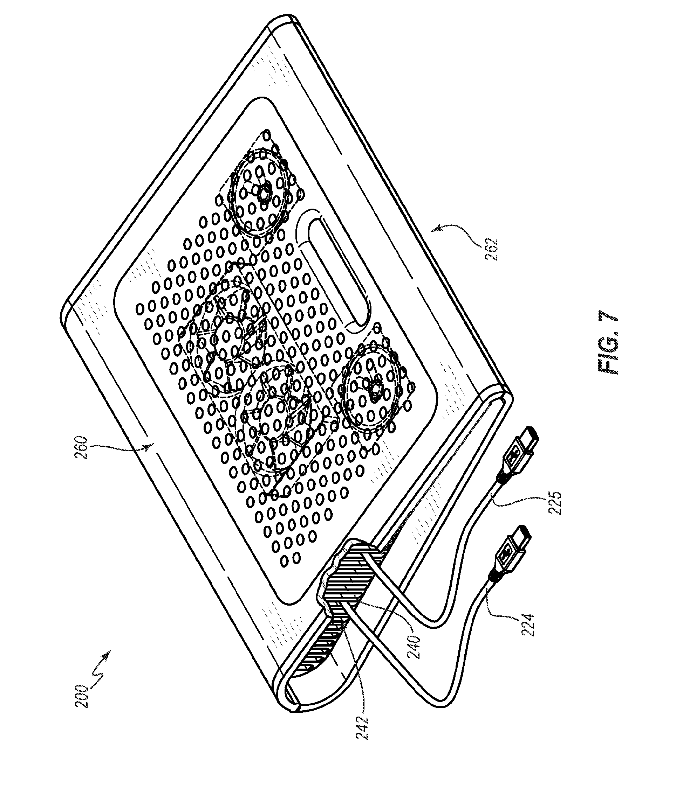

As shown in FIG. 7, the ribs 240 can be configured to grasp or otherwise receive power cords 224, 225 therein. In some embodiments, placement of a power cord 224 between adjacent ribs 240 causes the ribs 240 to deform outwardly, and the restorative force that arises in the deformed ribs 240 can grip the power cord 224 so as to keep it from moving. In some embodiments, the spacing between adjacent ribs 240 can be such that a memory stick or other device can be inserted into the interior cavity 204. For example, in various embodiments, the spacing between adjacent ribs is within a range of from about 2 millimeters to about 20 millimeters, about 4 millimeters to about 15 millimeters, about 5 millimeters to about 10 millimeters, is no more than about 2, 4, 5, 10, or 15 millimeters, or is no less than about 2, 4, 5, 10, or 15 millimeters.

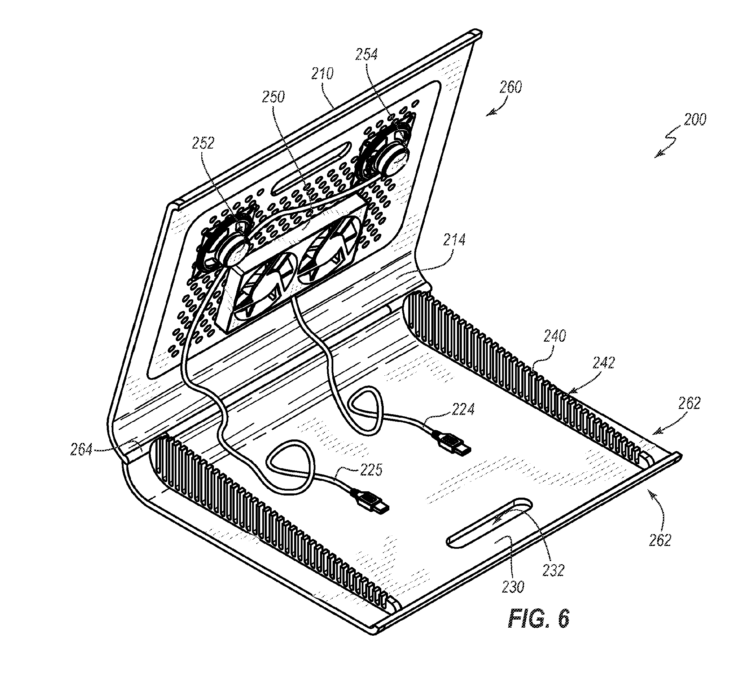

In the illustrated embodiment, an upper housing member 260 can comprise the upper panel 210 and the upper portions of the rearward and forward ends 214, 216 and a lower housing member 262 can comprise the lower panel 212 and the lower portions of the rearward and forward ends 214, 216. The upper and lower housing members 260, 262 can be joined to each other in any suitable manner. In the illustrated embodiment, the upper and lower housings members 260, 262 are joined to each other via a hinge 264 (see FIG. 6), such that they may be rotated relative to each other to open the laptop cooling platform 200. The cavity 204 thus may also serve as a storage compartment.

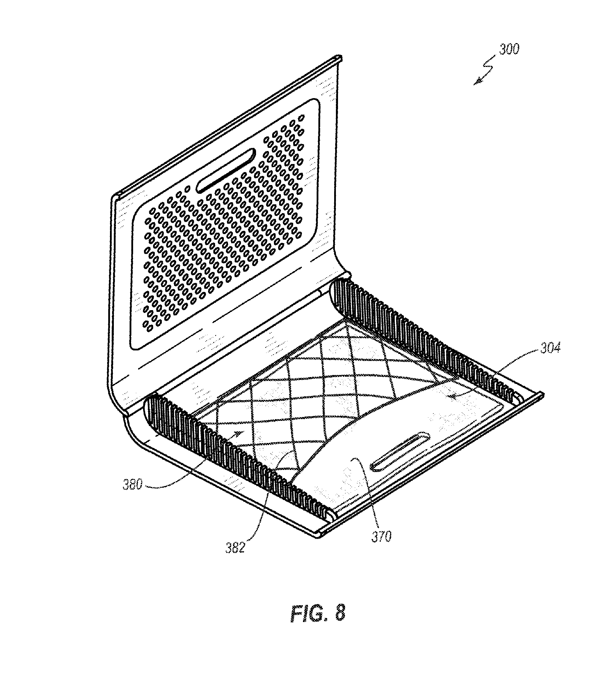

In some embodiments, the cavity 204 is sized to receive a laptop computer, such that the cooling platform 200 may be used as both a carrying case for the laptop computer and as a stand on which the computer may be used. In some embodiments, the cavity 204 may include multiple compartments, and may have storage areas for accessories or peripheral devices (e.g., charging cord, mouse, etc.). The cavity 204 may include pockets, straps, bands (elastic bands), or other suitable devices for retaining a laptop computer and/or other devices secure during transport. For example, features such as those described below with respect to FIG. 8 may be incorporated into the cavity 204.

With continued reference to FIG. 6, in the illustrated embodiment, the laptop cooling platform 200 includes an active cooling member 250 and left and right speakers 252, 254. The cooling member 250 can include an electrical cord 224 and the speakers 252, 254 can include one or more electrical cords 225. Any suitable connection interface may be used for the electrical cords 224, 225, and the cords 224, 225 can be configured to transmit power and/or information to the cooling member 250 and the speakers 252.

FIG. 8 illustrates another embodiment of a laptop cooling platform 300 that is similar to the laptop cooling platforms described above, particularly the laptop cooling platform 200. The laptop cooling platform 300 can be used as a carrying case for the laptop with which it is designed to be used. A cavity 304 of the platform thus can be sized to receive the laptop therein. In the illustrated embodiment, the laptop cooling platform 300 is a passive cooling system, and does not include a powered cooling member. The lack of a cooling member, in some arrangements, can provide more space for the laptop.

In some embodiments, one or more pads 370 may be included in the platform 300 to protect the laptop from being jarred or the like during transport. Further, the platform 300 may include a restraining device 380 of any suitable variety to limit movement of the laptop within the cavity 304. For example, the restraining device 380 can be configured to prevent the laptop from jostling within the cavity 304. In the illustrated embodiment, the restraining device 380 comprises netting 382. In other embodiments, straps, belts, pockets, compartments, or other mechanisms may be used. Any suitable number or arrangement of pockets, compartments, straps, belts, etc. is possible.

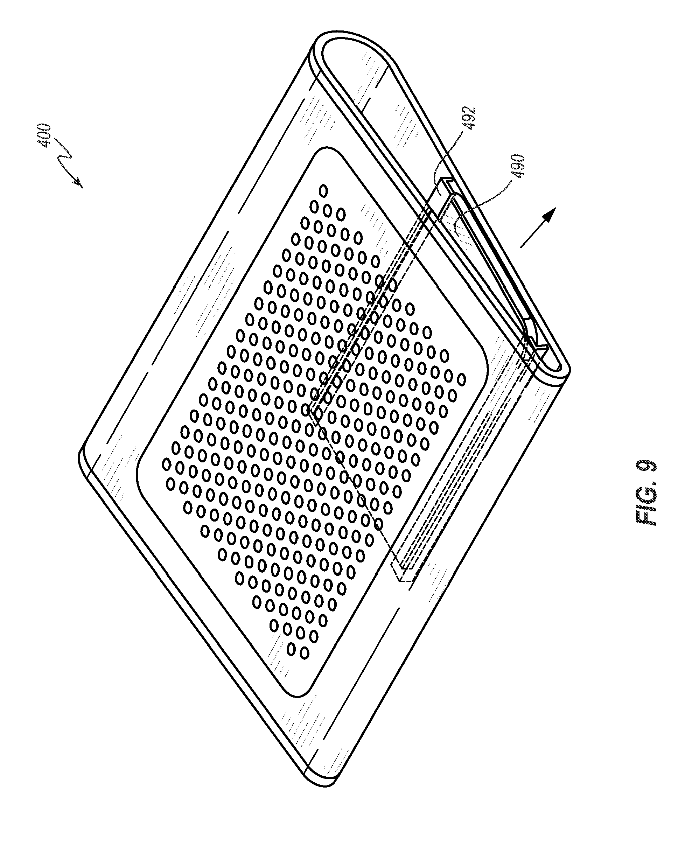

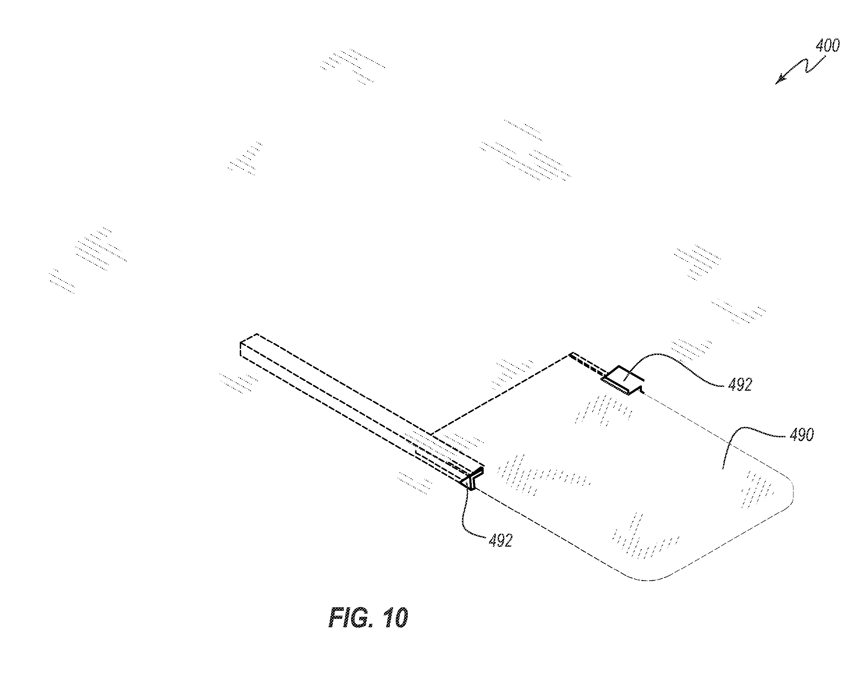

FIGS. 9-10 illustrate another embodiment of a laptop cooling platform 400 that is similar to the laptop cooling platforms described above, particularly the laptop cooling platform 100. The laptop cooling platform 400 includes a retractable mouse pad 490 that can transition between a retracted position (FIG. 9) and an extended position (FIG. 10). In the illustrated embodiment, the mouse pad 490 is connected to a lower panel 412 of the laptop cooling platform 400 via a plurality of tracks 492. Any other suitable mechanism may be used to allow the mouse pad 490 to be transitioned between the retracted and extended positions.

FIGS. 11-12 illustrate another embodiment of a laptop cooling platform 500, which includes an upper panel 510 that is somewhat different from those shown in other drawings. The upper panel 510 includes a ventilation plate 520 that extends forwardly and rearwardly toward a forward end 516 and a rearward end 514 of the platform 500 than do other ventilation plates shown in other drawings. In particular, the illustrated ventilation plate 520 terminates at the beginning of the curved portions of the forward and rearward ends 516, 514. The ventilation plate further includes ventilation openings 522 of varying sizes. The openings 522 that extend about a periphery of the ventilation plate 520 are smaller than those at an interior of the plate 520. Additionally, the ventilation plate 520 includes a greater number of ventilation openings 522.

Any other suitable arrangements for the upper panel 510, the ventilation plate 520, and the ventilation openings 522 is possible. Moreover, the arrangement shown in FIGS. 11 and 12 can be used with any other embodiment disclosed herein. In some embodiments, the number and/or size of ventilation openings 520 may be selected to permit a desired amount of venting without unduly weakening the plate 520.

The term "laptop computer" is used herein in a broad sense, and includes any suitable device for personal computing. Laptop computers can include devices that have dedicated keyboards and screens, which may be pivotally attached to each other. Smaller devices, which may not have a dedicated keyboard (e.g., tablet computers) may also be included in this term.

Without further elaboration, it is believed that one skilled in the art can use the preceding description to utilize the present disclosure to its fullest extent. The examples and embodiments disclosed herein are to be construed as merely illustrative and not a limitation of the scope of the present disclosure in any way. It will be apparent to those having skill in the art that changes may be made to the details of the above-described embodiments without departing from the underlying principles of the disclosure described herein. In other words, various modifications and improvements of the embodiments specifically disclosed in the description above are within the scope of the appended claims. The scope of the disclosure is, therefore, defined by the claims which follow. The scope further extends to the following statements:

1. A system for supporting a laptop computer, the system comprising: a support body that comprises an upper panel and a lower panel, the upper and lower panels at least partially defining an interior cavity therebetween, wherein the upper panel extends at an angle relative to the lower panel, the support body defining a lateral opening that is in fluid communication with the interior cavity and that extends between the upper and lower panels; a plurality of ventilation holes that extend through the upper panel so as to be in fluid communication with the interior cavity; and an active cooling member in fluid communication with at least a portion of the ventilation holes.

2. The system of statement 1, wherein the active cooling member is secured to the upper panel.

3. The system of statement 1 or 2, wherein the active cooling member comprises a fan.

4. The system of statement 1, 2 or 3, wherein the active cooling member comprises a control cable that is configured to draw power from a laptop computer.

5. The system of statement 1, 2, 3 or 4, further comprising a plurality of ribs that extend between the upper and lower panels of the support body.

6. The system of statement 5, wherein the ribs are resiliently deformable.

7. The system of any one of statements 1 to 6, further comprising one or more speakers that are secured to the support body.

## Claims

1. A platform configured to support a computer, the platform comprising:
a support body that comprises an upper panel and a lower panel, the upper and lower panels at least partially defining an interior cavity therebetween, wherein the upper panel extends at an angle relative to the lower panel, the support body defining a lateral opening that is in fluid communication with the interior cavity and that extends between the upper and lower panels; and
a ventilation plate disposed in the upper surface of the support body and comprising a plurality of ventilation holes that are in fluid communication with the interior cavity.

2. The platform of claim 1, further comprising an interfacing material extending about a majority of the exterior of the support body.

3. The platform of claim 2, wherein the interfacing material is thermally insulating.

4. The platform of any preceding claim, further comprising an additional lateral opening that is in communication with the interior cavity, wherein the lateral openings are at opposite sides of the support body.

5. The platform of any preceding claim, wherein the support body further comprises a curved end that joins front portions of the upper and lower panels to each other.

6. The platform of claim 5, wherein the support body further comprises a curved end that joins rear portions of the upper and lower panels to each other, optionally wherein the curved end at a rearward end of the support body defines a larger radius of curvature than does the curved end at a forward end of the support body.

7. The platform of any preceding claim, wherein an angle at which the upper panel extends relative to the lower panel is within a range of from about 5 to about 30 degrees.

8. The platform of any preceding claim, further comprising an active cooling member, optionally comprising a fan, in communication with the ventilation holes.

9. The platform of claim 8, wherein the active cooling member is disposed in the interior cavity.

10. The platform of claim 8 or claim 9, wherein the active cooling member comprises a control cable that is configured to draw power from a laptop computer.

11. The platform of any preceding claim, further comprising one or more speakers disposed in the interior cavity.

12. The platform of any preceding claim, wherein the upper panel is secured to the lower panel via a hinge.

13. The platform of any preceding claim, wherein the cavity is sized and shaped to received a laptop computer therein such that the laptop cooling platform may be used to selectively store the laptop computer at an interior thereof or support the laptop computer when it is placed on the upper panel, optionally wherein the cavity includes a restraining device that is configured to limit movement of a laptop computer within the cavity.

14. The platform of any preceding claim, wherein a plurality of ribs extend between the upper and lower panels, optionally wherein the ribs are resiliently deformable.

15. The platform of any preceding claim, further comprising an extendable mouse pad that is selectively retractable into the interior cavity.
